# EUROPEAN PATENT SPECIFICATION

(11) **EP 2 639 550 B1**
(45) Date of publication and mention of the grant of the patent: **29.08.2018**
(21) Application number: 13157814.8
(22) Date of filing: 05.03.2013
(51) Int. Cl.: G01C 5/00, G01C 15/00, G01S 17/08, H02G 1/02, H02G 7/00, G01S 17/42, G01S 17/88, G01S 7/00

(54) **Method for measuring the distance from the ground of an overhead electric power line**
Verfahren zum Messen der Entfernung zwischen Boden und hängender Stromleitung
Procédé pour mesurer la distance par rapport au sol d'une ligne électrique aérienne

(30) Priority: 16.03.2012 IT MI20120410
(43) Date of publication of application: 18.09.2013
(73) Proprietor: Ricerca Sul Sistema Energetico - RSE S.p.A., 20134 Milano (IT)
(72) Inventor: Perini, Umberto, 26854 PIEVE FISSIRAGA - LODI (IT); Golinelli, Elena, 20131 MILANO (IT); Musazzi, Sergio, 20025 LEGNANO (IT)
(74) Representative: Martegani, Franco

(56) References cited:
- EP-A1- 2 194 623
- JP-A- 4 168 316
- JP-A- 54 063 394
- JP-A- 2009 198 280
- KR-A- 20070 009 040
- US-A- 5 206 697
- US-A- 5 291 262
- US-A1- 2011 043 515
- US-B1- 6 590 640
- Jeff Hecht: "PHOTONIC FRONTIERS: EYE-SAFE LASERS - Retina-safe wavelengths benefit open-air applications", , 3 January 2008 (2008-01-03), Retrieved from the Internet: URL:http://www.laserfocusworld.com/article s/2008/03/photonic-frontiers-eye-safe-lase rs-retina-safe-wavelengths-benefit-open-ai r-applications.html [retrieved on 2015-12-01]

## Description

The present invention relates to a method for measuring the distance from the ground of overhead electric power line conductors.

The present invention is advantageously used for effecting the optical measurement of the ground clearance, i.e. the distance that separates the ground from the lowest conductor of an overhead electric power line, in particular on critical spans in specific periods, to which the following description will make explicit reference, at the same time maintaining its generic characteristics.

The measurement of the height or ground clearance of spans of overhead lines is generally particularly important for allowing the optimization of the transporting capacity of overhead electric power lines.

The document US 6590640 discloses a three-dimensional mapping apparatus that has a signal emitter to deliver a signal to a target having at least one attribute. The attribute may be a vertical face, a fissure, an overhang or outcrop. The mapping apparatus may also have a signal receiver to receive the signal reflected by the attribute. A signal processor may calculate a coordinate of the attribute relative to a global coordinate.

The document JP2009198280 discloses an overhead electric wire measurement apparatus which comprises: an imaging means for imaging the overhead electric wire between utility poles by the area sensor or the line sensor and obtaining the input image; a binarization process means for applying a binarization process to the input image, enhancing an electric wire portion in the input image, and creating a binarized image; an electric wire edge detecting means for detecting an edge of the electric wire portion in the binarized image, and creating edge data; and an electric wire ground height calculating means for calculating the ground height of the electric wire by using the edge data.

As is known, the ground clearance of conductors of energy transporting lines depends on the temperature reached by the conductor, which in turn depends on the current circulating, the atmospheric temperature, wind, solar radiation and humidity. In addition to this, there is the case of the formation of sleeves of snow/ice on the conductors, a condition that can also cause significant reductions in the ground clearance.

In order to guarantee the safe operability of overhead electric power lines, cautionary capacity limits are currently imposed, based on the use of deterministic or statistical evaluations based on national regulations.

Due to the growing demand for energy and the difficulty in upgrading the power supply network, it is extremely useful to have detailed information that can allow an increase in the electric current supply under these conditions and at the same time maintain a high safety level.

A great advantage has been obtained from an optimum knowledge of the real behaviour of electric power lines in relation to environmental conditions and the charge, i.e. the current circulating on the same electric power line.

Direct measurement techniques of the temperature of the conductor currently known comprise the use of various measuring apparatuses, whose installation requires complex work on the part of electrical experts, as it must generally be effected on live line conductors.

Furthermore, as mentioned above, another phenomenon that leads to both a reduction in the ground clearance and a possible interruption of the line is the formation of agglomerates or ice sleeves on the conductors.

At present, exhaustive experimental data that allow the validation of growth models of the sleeve on the basis of the environmental conditions and load of the line, are unavailable.

It should also be pointed out that the possibility of effecting ground clearance measurements without interacting with the electric power line would allow a prompter intervention capacity and a more effective collection of data necessary for defining more accurate safety regulations for the production and management of electric power lines.

An objective of the present invention is to solve and overcome the problems of the known art indicated above.

In particular, an objective of the present invention is to provide an optical measurement method capable of effecting, automatically and with a high time frequency, the ground clearance measurement of overhead electric power line conductors, without the necessity of interacting with the same line by the installation of complex instrumentations or with active or passive targets.

A further objective of the present invention is to provide a method capable of effecting ground clearance measurements with great precision, and characterized by reduced dimensions in order to allow its portability.

The structural and functional characteristics of the present invention and its advantages with respect to the known art will appear more evident from the claims provided hereunder, and in particular from the following description, referring to the enclosed drawings, which show the schematization of a preferred but non-limiting embodiment of a measurement apparatus which is not part of the claimed invention for performing the claimed method, in which:
- figure 1 represents a schematic view of the measurement apparatus object of the invention; and
- figure 2 is an enlarged view in scale of a component of the apparatus of figure 1.

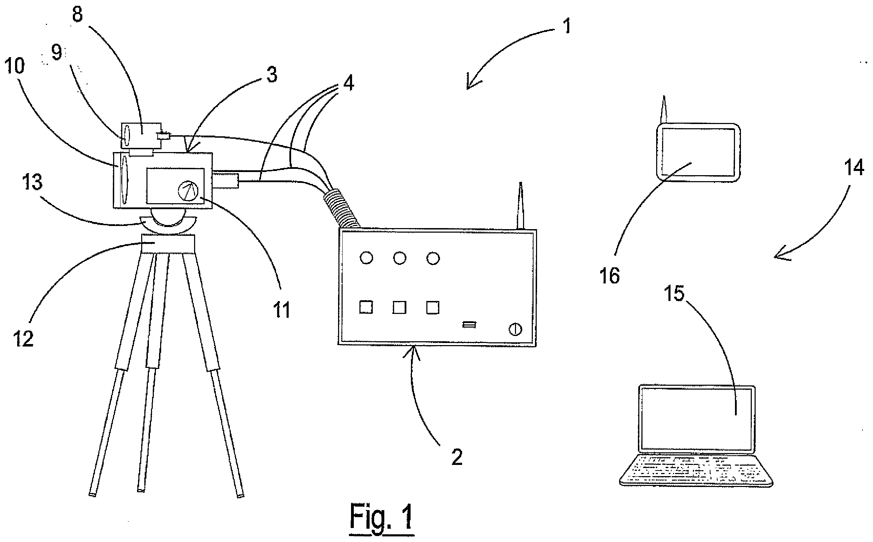

With reference to figure 1, 1 indicates as a whole an optical apparatus for measuring the distance from the ground of an overhead electric power line (known and not illustrated).

The apparatus 1 for performing the claimed method, which is not part of the claimed invention, is suitable for operating, starting from the detection of the intensity peak of the back-scattered signal from one or more electric power line conductors when it is reached by an infrared laser beam (characterized by so-called eye-safe emission), which is moved angularly on a vertical plane perpendicular to that containing the conductor under examination.

If the angle formed by the propagation direction of the beam with respect to the horizontal plane when the infrared signal scattered by the conductor has been received and detected, is known, it is therefore possible to determine the ground clearance, whose absolute value can be calculated with a precision of 5 cm, once an initial reference measurement has been effected.

More specifically, according to what is illustrated in figure 1, the apparatus 1 comprises a unit 2 for the generation and management of infrared laser radiation (generation unit), and a sending and receiving unit 3 of the infrared laser radiation towards an electric power line conductor under examination, said unit 3 being moved angularly according to a vertical plane (sending and receiving unit).

The two units 2 and 3 are connected to each other by means of suitable cables 4, electrical and in optical fiber.

According to what is illustrated in figure 1, the unit 3 is assembled on a motorized angular movement and positioning precision system 13 and is equipped with a double-axis precision inclinometer 11.

Said unit 3 comprises a formation optics 8 of an infrared laser beam through an infrared lens 9 and an optical reception system 10 of the infrared signal back-scattered from the conductor.

This system 10 is defined by an infrared optics, a band pass interferential filter centered on the emission wavelength of the infrared laser and an infrared detector.

The unit 3 in particular has reduced dimensions to allow it to be easily transported and can be assembled on a support 12 defined for example by a tripod for cameras.

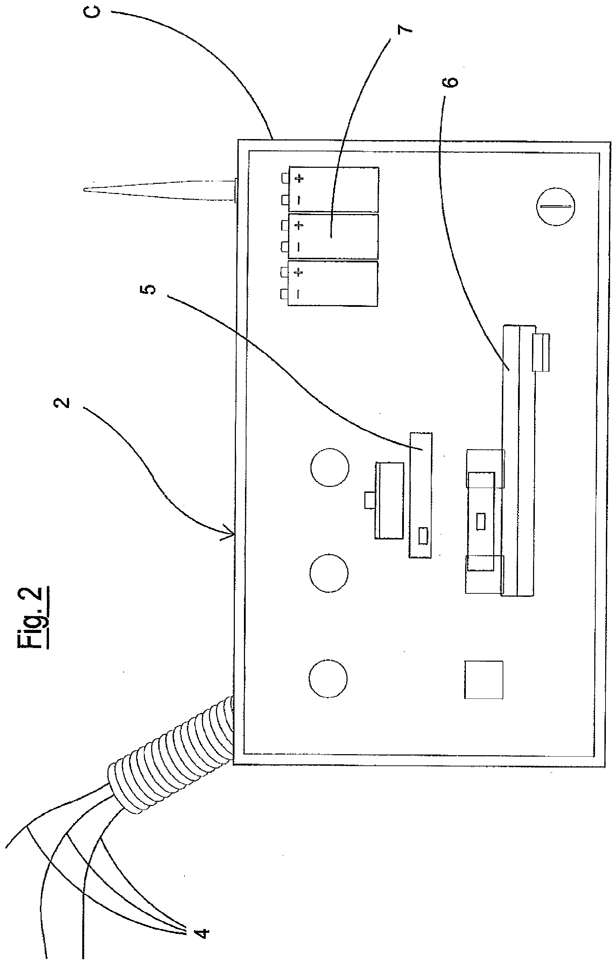

According to what is illustrated in figure 2, the unit 2 comprises a portable container C containing, in its interior, the infrared laser source 5 whose radiation is sent to the collimator lens 9 of the unit 3 through the above-mentioned cables 4 made of optical fiber, and also comprises a control computer 6 provided with a data acquisition card connected via USB cable to the unit 3, power supplies and batteries 7 for autonomous functioning.

The unit 3 is therefore suitable, when in use, for directing the infrared laser beam towards a conductor of the above-mentioned overhead electric power line, and receiving the optical signal scattered by the conductor itself by means of the optical system 10 of the unit 3.

The laser beam emitted by the unit 3 is periodically moved angularly with a constant angular rate, upwards and downwards on a vertical plane by means of the above movement system 13.

The signal coming from the infrared detector of the optical system 10 is then acquired by the computer 6 and processed.

The above optical signal scattered by the conductor under examination is registered in relation to the lighting angle, measured by means of the precise angular positioner of the system 13 and biaxial inclinometer 11.

The absolute angular position of the conductor itself with respect to the gravity acceleration direction can be obtained from the position of the peak of the signal scattered by the conductor under examination, and consequently also the ground clearance, whose absolute value can be determined with a precision of 5 centimeters.

The diameter of the same conductor can also be defined from the measurement of the angular dimension of the peak of the signal scattered by the conductor under examination, with a precision of ±5 mm.

In both cases, when effecting an onsite detection, the distance of the apparatus 1 from the ground vertical of the conductor of the electric power line, must be known.

The apparatus 1 also comprises a remote control-management and display unit 14, connected to the unit 2 by means of a wireless connection.

The unit 14 comprises, for example, a personal computer 15, or alternatively a PC tablet 16 with a touch-screen type screen.

It should also be pointed out that, with the apparatus described above, it is also advantageously possible to measure the ground clearance in the case of bad weather, with rain and snow, and regardless of variations in the orientation of the above-mentioned tripod support 12.

## Claims

1. Method for measuring the distance from the ground of an overhead electric power line comprising at least one conductor that is not provided with an active or passive target, said method being performed by an apparatus (1) comprising a generation and management unit (2) for generating an eye-safe infrared laser beam, and a sending and receiving unit (3) for sending and receiving said infrared laser beam, said sending and receiving unit (3) being connected to said generation and management unit (2), said method comprising the steps of:
A- generating said eye-safe infrared laser beam by said generation and management unit (2) emitting said eye-safe infrared laser beam by said sending and receiving unit (3),
B- moving said eye-safe infrared laser beam periodically angularly with a constant angular rate upwards and downwards in a vertical plane perpendicular to a plane containing said at least one conductor, performed by a movement and tilt-regulation means (13) included in said sending an receiving unit (3),
C- detecting an intensity peak of a signal back-scattered from said at least one conductor when reached by said eye-safe infrared laser beam,
D- registering said signal scattered by said at least one conductor in relation to a lighting angle, said lighting angle being measured by means of an angular positioner and of a biaxial inclinometer (11), said biaxial inclinometer being comprised in said sending and receiving unit (3),
E- determining an absolute angular position of said at least one conductor with respect to the gravity acceleration direction from the position of said intensity peak of the signal scattered by said at least one conductor,
F- knowing a distance between the apparatus (1) and a ground vertical of said at least one conductor to be measured,
G- determining the ground clearance of said at least one conductor from the absolute angular position of said at least one conductor.

## Patentansprüche

1. Verfahren zum Messen der Distanz zwischen dem Boden und einer hängenden elektrischen Stromleitung, die mindestens einen elektrischen Leiter umfasst, der nicht mit einem aktiven oder passiven Ziel versehen ist, wobei das Verfahren durch eine Vorrichtung (1) ausgeführt wird, die eine Erzeugungs- und Verwaltungseinheit (2) zum Erzeugen eines für Augen ungefährlichen Infrarot-Laserstrahls und eine Sende- und Empfangseinheit (3) zum Senden und Empfangen des Infrarot-Laserstrahls umfasst, wobei die Sende- und Empfangseinheit (3) mit der Erzeugungs- und Verwaltungseinheit (2) verbunden ist, wobei das Verfahren die Schritte umfasst, dass:
A - der für Augen ungefährliche Infrarot-Laserstrahl durch die Erzeugungs- und Verwaltungseinheit (2) erzeugt wird und der für Augen ungefährliche Infrarot-Laserstrahl durch die Sende- und Empfangseinheit (3) emittiert wird,
B - der für Augen ungefährliche Infrarot-Laserstrahl periodisch mit einer konstanten Winkelgeschwindigkeit nach oben und nach unten in einer vertikalen Ebene, welche rechtwinklig zu einer Ebene ist, die den mindestens einen elektrischen Leiter enthält, um einen Winkel bewegt wird, was von einem Bewegungs- und Neigungs-Regulierungsmittel (13) ausgeführt wird, das in der Sende- und Empfangseinheit (3) enthalten ist,
C - eine Intensitätsspitze eines Signals detektiert wird, das von dem mindestens einen elektrischen Leiter zurückgeworfen wird, wenn dieser von den für Augen ungefährlichen Infrarot-Laserstrahl erreicht wird,
D - das Signal, das von dem mindestens einen elektrischen Leiter zurückgeworfen wird, mit Bezug auf einen Beleuchtungswinkel registriert wird, wobei der Beleuchtungswinkel mit Hilfe einer Winkelpositioniervorrichtung und eines biaxialen Neigungsmessers (11) gemessen wird, wobei der biaxiale Neigungsmesser in der Sende- und Empfangseinheit (3) umfasst ist,
E - eine absolute Winkelposition des mindestens einen elektrischen Leiters mit Bezug auf die Richtung der Schwerkraftbeschleunigung aus der Position der Intensitätsspitze des Signals, das durch den mindestens einen elektrischen Leiter zurückgeworfen wird, bestimmt wird,
F - eine Distanz zwischen der Vorrichtung (1) und einer Vertikalen zum Boden des mindestens einen zu messenden elektrischen Leiters in Erfahrung gebracht wird,
G - der Bodenabstand des mindestens einen elektrischen Leiters aus der absoluten Winkelposition des mindestens einen elektrischen Leiters bestimmt wird.

## Revendications

1. Procédé pour mesurer la distance au sol d'une ligne électrique aérienne comprenant au moins un conducteur qui n'est pas pourvu d'une cible active ou passive, ledit procédé étant mis en oeuvre par un appareil (1) comprenant une unité de génération et de gestion (2) pour générer un faisceau laser infrarouge sans danger pour les yeux, et une unité d'émission et de réception (3) pour émettre et recevoir ledit faisceau laser infrarouge, ladite unité d'émission et de réception (3) étant connectée à ladite unité de génération et de gestion (2), ledit procédé comprenant les étapes suivantes :
A. génération dudit faisceau laser infrarouge sans danger pour les yeux par ladite unité de génération et de gestion (2) et émission dudit faisceau laser infrarouge sans danger pour les yeux par ladite unité d'émission et de réception (3),
B. déplacement angulaire périodique dudit faisceau laser infrarouge sans danger pour les yeux à une vitesse angulaire constante vers le haut et vers le bas dans un plan vertical perpendiculaire à un plan contenant ledit au moins un conducteur, effectué par un moyen de mouvement et de régulation d'inclinaison (13) inclus dans ladite unité d'émission et de réception (3),
C. détection d'un pic d'intensité d'un signal rétrodiffusé par ledit au moins un conducteur lorsqu'il est atteint par ledit faisceau laser infrarouge sans danger pour les yeux,
D. enregistrement dudit signal diffusé par ledit au moins un conducteur en fonction d'un angle d'éclairage, ledit angle d'éclairage étant mesuré au moyen d'un positionneur angulaire et d'un inclinomètre biaxial (11), ledit inclinomètre biaxial étant compris dans ladite unité d'émission et de réception (3),
E. détermination d'une position angulaire absolue dudit au moins un conducteur par rapport à la direction de l'accélération de la pesanteur à partir de la position dudit pic d'intensité du signal diffusé par ledit au moins un conducteur,
F. connaissance d'une distance entre l'appareil (1) et le sol à la verticale dudit au moins un conducteur à mesurer,
G. détermination de la garde au sol dudit au moins un conducteur à partir de la position angulaire absolue dudit au moins un conducteur.
